# EUROPÄISCHE PATENTSCHRIFT

(11) **EP 3 173 673 B1**
(45) Veröffentlichungstag und Bekanntmachung des Hinweises auf die Patenterteilung: **12.09.2018**
(21) Anmeldenummer: 16200037.6
(22) Anmeldetag: 22.11.2016
(51) Int. Cl.: F16L 3/13, E03F 3/04, F16L 3/26

(54) **VERLEGEHILFE FÜR ABFLUSSROHRE**
LAYING AID FOR DRAINAGE TUBES
DISPOSITIF AUXILIAIRE DE POSE POUR TUYAUX D'ÉVACUATION

(30) Priorität: 27.11.2015 AT 510182015
(43) Veröffentlichungstag der Anmeldung: 31.05.2017
(73) Patentinhaber: Höftberger, Hermann, 4676 Aistersheim (AT)
(72) Erfinder: Höftberger, Hermann, 4676 Aistersheim (AT)
(74) Vertreter: Patentanwaltskanzlei Hübscher

(56) Entgegenhaltungen:
- US-A- 3 576 304
- US-B1- 6 619 596

## Beschreibung

Die Erfindung bezieht sich auf eine Verlegehilfe für Abflussrohre mit unterschiedlich hohen Unterlagskörpern.

Abflussrohre sind im Bodenbereich unter einem vorgegebenen Gefälle zu verlegen, was bei Hausinstallationen üblicherweise eine Vermessung der Abflussrohre zum Einstellen des Gefälles und ein Festhalten der Abflussrohre in der vermessenen Lage erfordert. Zu diesem Zweck wird das zu verlegende Abflussrohr beispielsweise in eine Unterbettung aus noch nicht ausgehärtetem Beton eingedrückt. Eine andere Möglichkeit zum Festlegen eines Abflussrohres in einem vorgegebenen Gefälle besteht darin, das Gefälle des vermessenen Abflussrohrs durch Unterlagskörper festzuhalten, die als Abstandhalter fungieren. In jedem Fall ist jedoch das Abschlussrohr hinsichtlich seines Gefälles zu vermessen, was nicht nur aufwendig ist, sondern auch zu Fehlern Anlass gibt.

Der Erfindung liegt somit die Aufgabe zugrunde, eine Verlegehilfe zu schaffen, bei deren Einsatz eine aufwendige Vermessung des Abflussrohrgefälles entfallen und die Einhaltung des vorgegebenen Gefälles mit einfachen Mitteln sichergestellt werden kann. Eine gattungsbildende Verlegehilfe ist aus der US 6,619,596 B1 bekannt. Die Erfindung löst die gestellte Aufgabe dadurch, dass mehrere hintereinandergereihte Unterlagskörper zu einem Magazinkörper zusammengefasst sind, der eine der Länge nach durchgehende Aufnahmerinne für ein Abflussrohr aufweist und mit quer zur Aufnahmerinne verlaufenden, mit gleichem Abstand voneinander vorgesehenen Solltrennstellen für die einzelnen Unterlagskörper versehen ist, und dass der Magazinkörper auf der der Aufnahmerinne gegenüberliegenden Seite sich zwischen den Solltrennstellen erstreckende gegeneinander gleichmäßig abgestufte Aufstandsflächen bildet.

Da zufolge dieser Maßnahmen die vom Magazinkörper abtrennbaren Unterlagskörper das zu verlegende Abflussrohr in der Aufnahmerinne formschlüssig aufnehmen und aufgrund der gleichmäßigen Abstufung der Aufstandsflächen unterschiedliche, aufeinander abgestimmte Höhen aufweisen, bestimmt der gegenseitige Abstand dieser der Reihe nach vom Magazinkörper abgetrennten Unterlagskörper das Gefälle des Abflussrohrs, sodass zum Verlegen das Abflussrohr lediglich auf den Unterlagskörpern in einem dem Gefälle entsprechenden Abstand abzustützen ist. Dies bedeutet für den Verlegenden, dass er lediglich den vorgegebenen Abstand zwischen den Unterlagskörpern einhalten muss, um das vorgesehene Gefälle für das Abflussrohr sicherzustellen. Da die hierfür benötigten Unterlagskörper abgestuft in einem Magazinkörper zusammengefasst sind, brauchen die Unterlagskörper bloß der Reihe nach vom Magazinkörper abgetrennt und das zu verlegende Abflussrohr in dem vorgeschriebenen Abstand auf den Unterlagskörpern abgestützt zu werden. Die Festlegung der Unterlagskörper gegenüber einer horizontalen Grundfläche kann dann in herkömmlicher Weise beispielsweise mit Hilfe von das Abflussrohr umschließenden Bügeln erfolgen, die auf der Grundfläche befestigt werden.

Obwohl bei den geforderten geringen Gefällewinkeln das Gefälle im Bereich der Aufnahmerinne der einzelnen Unterlagskörper nicht zwingend berücksichtigt werden muss, ergeben sich bessere Abstützbedingungen für das Abflussrohr, wenn die zueinander parallelen Aufstandsflächen des Magazinkörpers gegenüber der Längsachse der Aufnahmerinne einen einem vorgegebenen Gefälle für das Abflussrohr entsprechenden Winkel einschließen, weil in diesem Fall die mit ihrer Aufstandsfläche auf einer horizontalen Grundfläche aufruhenden Unterlagskörper eine in ihrer Neigung an das Gefälle angepasste Aufnahmerinne für das Abflussrohr aufweisen.

Da zur einfacheren Handhabung die Magazinkörper nur eine begrenzte Anzahl von Unterlagskörpern bilden, sind die Unterlagskörper eines Magazinkörpers lediglich für die Abstützung einer vorgegebenen Länge des Abflussrohres geeignet. Um größere Rohrlängen unter dem vorgegebenen Gefälle verlegen zu können, können die Unterlagskörper mit Zusatzstücken, die eine Höhe entsprechend dem Produkt aus der Anzahl der im Magazinkörper enthaltenen Unterlagskörper und der Stufenhöhe zwischen zwei unmittelbar aufeinanderfolgenden Unterlagskörpern aufweisen, zu einem Abstandhalter zusammengesetzt werden. Aufgrund der Abstimmung der Höhe dieser Zusatzstücke an die Gesamtabstufung der Unterlagskörper eines Magazinkörpers wird durch die aus den Zusatzstücken und den Unterlagskörpern eines Magazinkörpers zusammengesetzten Abstandhalter die in ihrer Höhe aufeinander abgestimmte Reihe der Abstützungen für das unter dem vorgegebenen Gefälle zu verlegenden Abflussrohr kontinuierlich fortgesetzt.

Wird der Magazinkörper aus Hartschaumstoff gefertigt, so ergeben sich nicht nur einfache Herstellungsbedingungen für den Magazinkörper, sondern auch vorteilhafte Materialeigenschaften hinsichtlich des Gewichts sowie der Wärme- und der Schalldämmung.

In der Zeichnung ist der Erfindungsgegenstand beispielsweise dargestellt. Es zeigen
- Fig. 1: einen erfindungsgemäßen Magazinkörper in einer zum Teil aufgerissenen Seitenansicht,
- Fig. 2: diesen Magazinkörper in einer stirnseitigen Ansicht,
- Fig. 3: ein mithilfe der von einem Magazinkörper abgetrennten Unterlagskörper verlegtes Abflussrohr in einer schematischen Seitenansicht und
- Fig. 4: eine der Fig. 3 entsprechende Darstellung eines verlegten Abflussrohrs mit aus Unterlagskörpern und Zusatzstücken zusammengesetzten Abstandhaltern.

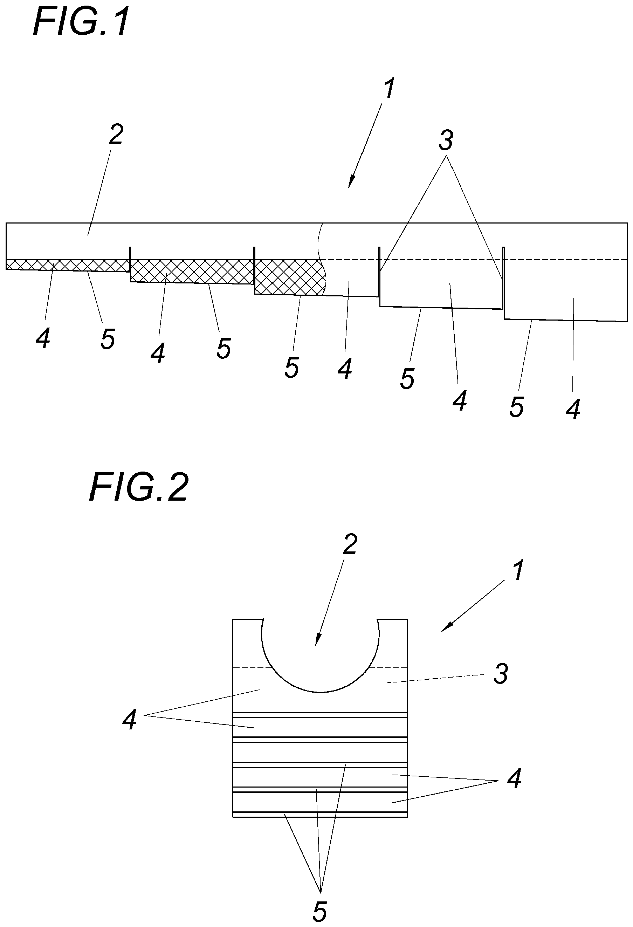

Der Magazinkörper 1 weist gemäß der Darstellung nach den Fig. 1 und 2 eine über seine Länge durchgehende Aufnahmerinne 2 auf und ist durch quer zur Aufnahmerinne 2 verlaufende Solltrennstellen 3, die beispielsweise durch Trennschnitte gebildet werden, in einzelne, hintereinandergereihte Unterlagskörper 4 gleicher Länge unterteilt. Auf der der Aufnahmerinne 2 gegenüberliegenden Seite bilden die Unterlagskörper 4 Aufstandsflächen 5 die gegeneinander gleichmäßig abgestuft sind und zueinander parallel verlaufen. Die Aufstandsflächen 5 sind dabei vorzugsweise gegenüber der Achse der Aufnahmerinne 2 unter einem dem vorgegebenen Gefälle entsprechenden Winkel geneigt.

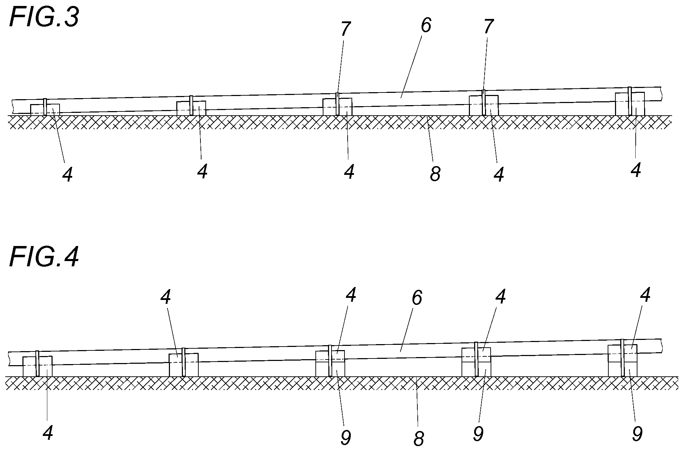

Aufgrund der gleichmäßigen Abstufung zwischen den Aufstandsflächen 5 der Unterlagskörper 4 des Magazinkörpers 1 bestimmt ein auf die Abstufung abgestimmter Abstand zwischen den einzelnen der Reihe nach vom Magazinkörper 1 abgetrennten Unterlagskörpern 4 die Neigung des auf den Unterlagskörpern 4 abgestützten Abflussrohrs 6, wie dies der Fig. 3 entnommen werden kann. Um ein Abflussrohr 6 mit dem durch die Unterlagskörper 4 des Magazinkörpers 1 vorgegebenen Gefälle verlegen zu können, braucht folglich das Abflussrohr 6 lediglich auf den in dem vorgegebenen gegenseitigen Abstand der Reihe nach angeordneten Unterlagskörpern 4 abgestützt zu werden, sodass für die Verlegung des Abflussrohrs 6 unter dem vorgegebenen Gefälle lediglich der vorgegebene Abstand zwischen den Unterlagskörpern 4 eingehalten zu werden braucht. Das Abflussrohr 6 wird in der Aufnahmerinne 2 der Unterlagskörper 4 formschlüssig gehalten, wobei das Rinnenprofil gemäß der Fig. 2 vorteilhaft einen die Rohrhälfte übersteigenden Umfang aufweist, sodass sich durch das Rinnenprofil eine Verrastung zwischen dem Abflussrohr 6 und den Unterlagskörpern 4 ergibt. Die hierfür erforderliche elastische Verformung der Rinnenlängsränder wird bei einer Fertigung des Magazinkörpers 1 aus einem Hartschaumstoff ohne besondere Zusatzmaßnahmen erreicht. Zur Fixierung der Unterlagskörper 4 mit dem aufgenommenen Abflussrohr 6 können das Abflussrohr 6 außen umschließende Bügel 7 vorgesehen werden, die auf der horizontalen Grundfläche 8 befestigt werden, der gegenüber das Gefälle einzuhalten ist.

Reicht der höchste der Unterlagskörper 4 des Magazinkörpers 1 nicht zur Rohrabstützung aus, so können in vorteilhafter Weise Zusatzkörper 9 zum Einsatz kommen, deren Höhe dem Produkt aus der Anzahl der durch den Magazinkörper 1 gebildeten Unterlagskörper 4 und der Stufenhöhe zwischen zwei unmittelbar aufeinanderfolgenden Unterlagskörpern entspricht. Diese Zusatzkörper 9 können somit mit den Unterlagskörpern 4 eines Magazinkörpers 1 zu Abstandhaltern zusammengesetzt werden, die die abgestufte Reihe der Unterlagskörper 4 eines Magazinkörpers 1 zur Festlegung des vorgegebenen Rohrgefälles kontinuierlich fortsetzt, wie dies der Fig. 4 entnommen werden kann.

## Patentansprüche

1. Verlegehilfe für Abflussrohre (6) mit unterschiedlich hohen Unterlagskörpern (4), wobei mehrere hintereinandergereihte Unterlagskörper (4) zu einem Magazinkörper (1) zusammengefasst sind, der eine der Länge nach durchgehende Aufnahmerinne (2) für ein Abflussrohr (6) aufweist, **dadurch gekennzeichnet, dass** der Magazinkörper (1) mit quer zur Aufnahmerinne (2) verlaufenden, mit gleichem Abstand voneinander vorgesehenen Solltrennstellen (3) für die einzelnen Unterlagskörper (4) versehen ist, und dass der Magazinkörper (1) auf der der Aufnahmerinne (2) gegenüberliegenden Seite sich zwischen den Solltrennstellen (3) erstreckende gegeneinander gleichmäßig abgestufte Aufstandsflächen (5) bildet.

2. Verlegehilfe nach Anspruch 1, **dadurch gekennzeichnet, dass** die zueinander parallelen Aufstandsflächen (5) des Magazinkörpers (1) gegenüber der Längsachse der Aufnahmerinne (2) einen einem vorgegebenen Gefälle für das Abflussrohr (6) entsprechenden Winkel einschließen.

3. Verlegehilfe nach Anspruch 1 oder 2, **dadurch gekennzeichnet, dass** die Unterlagskörper (4) mit Zusatzstücken (9), die eine Höhe entsprechend dem Produkt aus der Anzahl der im Magazinkörper (1) enthaltenen Unterlagskörper (4) und der Stufenhöhe zwischen zwei unmittelbar aufeinanderfolgenden Unterlagskörpern (4) aufweisen, zu einem Abstandhalter zusammensetzbar sind.

4. Verlegehilfe nach einem der Ansprüche 1 bis 3, **dadurch gekennzeichnet, dass** der Magazinkörper (1) aus einem Hartschaumstoff gefertigt ist.

## Claims

1. Laying aid for drainage pipes (6) having base bodies (4) of different heights, wherein a plurality of base bodies (4) lined up one behind the other are combined to form a magazine body (1) which comprises a receiving channel (2) - which is continuous over its length - for a drainage pipe (6), **characterised in that** the magazine body (1) is provided with desired breaking points (3) - which extend transversely to the receiving channel and are uniformly spaced apart from each other - for the individual base bodies (4), and that, on the side opposite the receiving channel (2), the magazine body (1) forms spacing surfaces (5) extending between the desired breaking points (3) and uniformly stepped with respect to each other.

2. Laying aid as claimed in claim 1, **characterised in that**, with respect to the longitudinal axis of the receiving channel (2), the mutually parallel spacing surfaces (5) of the magazine body (1) form an angle corresponding to a preset gradient for the drainage pipe (6).

3. Laying aid as claimed in claim 1 or 2, **characterised in that** the base bodies (4) can be fitted together with additional pieces (9) to form a spacer, said additional pieces comprising a height corresponding to the product of the number of base bodies (4) contained in the magazine body (1) and the step height between two immediately successive base bodies (4).

4. Laying aid as claimed in any one of claims 1 to 3, **characterised in that** the magazine body (1) is produced from a hard foam.

## Revendications

1. Aide à la pose pour des tuyaux d'évacuation (6) avec des corps de support (4) à hauteur différente, plusieurs corps de support (4) alignés les uns derrière les autres étant rassemblés en un corps de magasin (1), qui comporte une rigole de réception (2) continue dans le sens de la longueur pour un tuyau d'évacuation (6), **caractérisé en ce que** le corps de magasin (1) est pourvu de points de séparation théorique (3), s'étendant de manière transversale par rapport à la rigole de réception (2), prévus à une distance égale les uns des autres, pour les divers corps de support (4) et **en ce que** le corps de magasin (1) forme, sur le côté faisant face à la rigole de réception (2), des surfaces de contact (5) étagées de manière homogène s'étendant entre les points de séparation théorique (3).

2. Aide à la pose selon la revendication 1, **caractérisé en ce que** les surfaces de contact (5), parallèles les unes aux autres, du corps de magasin (1) comprennent, par rapport à l'axe longitudinal de la rigole de réception (2), un angle correspondant à une déclivité prédéfinie pour le tuyau d'évacuation (6).

3. Aide à la pose selon la revendication 1 ou 2, **caractérisé en ce que** les corps de support (4) peuvent être assemblés en support d'écartement avec des pièces supplémentaires (9) qui comportent une hauteur, en fonction du produit, du nombre de corps de support (4) présents dans le corps de magasin (1) et de la hauteur d'étage entre deux corps de support (4) immédiatement adjacents.

4. Aide à la pose selon l'une des revendications 1 à 3, **caractérisé en ce que** le corps de magasin (1) est fabriqué à partir d'une mousse dure.
